# EUROPÄISCHE PATENTSCHRIFT

(11) **EP 1 651 384 B1**
(45) Veröffentlichungstag und Bekanntmachung des Hinweises auf die Patenterteilung: **04.10.2006**
(21) Anmeldenummer: 04738836.8
(22) Anmeldetag: 01.07.2004
(51) Int. Cl.: B23Q 11/00, B23Q 1/70

(54) **WERKZEUGMASCHINENPINOLE**
SPINDLE SLEEVE FOR A MACHINE-TOOL
DOUILLE POUR MACHINE-OUTIL

(30) Priorität: 02.07.2003 DE 10329590
(43) Veröffentlichungstag der Anmeldung: 03.05.2006
(73) Patentinhaber: Union Werkzeugmaschinen GmbH Chemnitz, 09116 Chemnitz (DE)
(72) Erfinder: MÜLLER, Lutz, 09116 Chemnitz (DE); ZANDER, Andreas, 09112 Chemnitz (DE)
(74) Vertreter: Seerig, Dieter
(86) Internationale Anmeldenummer: PCT/DE2004/001390
(87) Internationale Veröffentlichungsnummer: WO 2005/002790

(56) Entgegenhaltungen:
- DE-A- 10 123 717
- GB-A- 501 320

## Beschreibung

Die Erfindung betrifft eine Werkzeugmaschinenpinole mit einer Werkzeugaufnahme für Werkzeuge mit einem Werkzeughalter und einem Kegel zum Kraftschluss mit einer Pinole aus Stahl, wobei die Pinole in einer Hohlspindel, die in einer Bearbeitungseinheit drehbar gelagert ist, längs verschiebbar geführt wird und an einem der Werkzeugaufnahme gegenüberliegenden Ende in einem Lagerschlitten drehbar und axial gestützt angeordnet ist.

Es ist bekannt, dass zur Erfassung des thermischen Zustandes der Arbeitsspindeln von Werkzeugmaschinen die Anordnung von Temperaturmessstellen erfolgt. Dabei werden Messwiderstände als Sensoren in gleichen Abständen längs in die Spindel eingesetzt und mit Kunstharz vergossen. Am hinteren Spindelende ist von der umlaufenden Spindel zum feststehenden Lagerbock hin eine berührungslos arbeitende Messwertübertragungseinrichtung angeordnet, so dass die Signale zur Messwertverarbeitung mit Digitalisierung weitergeleitet werden könne. Die Übertragung der Temperaturmesswerte wirkt unabhängig von der Spindeldrehzahl vom Stillstand bis zur Maximaldrehzahl. Über eine telemetrische Strecke erfolgt sowohl die Steuerung der Messwiderstände als auch die Abgabe der Messwerte. Die aus den Messwerten errechneten Spindeldehnungen sind die Ausgangsgrößen für die über die CNC-Steuerung zu erfolgende Kompensationen. Diese Art der Ermittlung der thermischen Dehnung der Arbeitsspindel zwecks Kompensation ist auch bei einer Werkzeugmaschinenpinole relevant.
Bei einer Werkzeugmaschinenpinole mit einer Werkzeugaufnahme für Werkzeuge mit einem Werkzeughalter und einem Kegel zum Kraftschluss mit der Pinole ist die Pinole in einer Hohlspindel einer Bearbeitungseinheit drehbar gelagert und am gegenüberliegenden Ende in einem Lagerschlitten drehbar und axial gestützt angeordnet. Diese Kompensationseinrichtung weist den Nachteil auf, dass zur Erfassung und Übertragung der Messwerte zwecks der Errechnung der thermischen Dehnung ein hoher technischer Aufwand notwendig ist. Weiterhin ist die thermischen Dehnung grundsätzlich von den Messwerten abhängig, so dass falsche Messwerte eine falsche Dehnungsermittlung ergeben, die sich weiter als eine wertmäßig unkorrekten axialen Zustellung der Pinole auswirkt.
Aus der DE 10123717 A1 ist eine Spindelwelle für eine Motorspindel bekannt, die im Gehäuse der Motorspindel in einer Festlagerung und einer Loslagerung aufgenommen ist, wobei das aufgenommene Werkzeug das bearbeitete Werkstück bei angetriebener Spindelwelle an einer Werkzeugschnittstelle kontaktiert und die Werkzeugschnittstelle bei der Werkstückbehandlung eine Verlagerung in axialer Richtung der Spindelwelle erfährt, wobei ein Wegsensor an der Spindellagerung zur Ermittlung der axialen Verlagerung der Werkzeugschnittstelle vorgesehen ist. Die DE 4009461 A1 weist eine Spindel für eine Werkzeugmaschine auf, die ein zylindrisches Element zur Aufnahme des Schaftes eines Werkzeuges umfasst, das durch Wickeln von Kohlenstoff- oder Glasfasern hergestellt ist, wobei die gewickelte Faser mit einem aushärtbaren Harz imprägniert ist. Durch den Aufbau ist es möglich, den linearen Ausdehnungskoeffizienten der Spindel herabzusetzen und dadurch die Bearbeitungsgenauigkeit zu verbessern.

Aufgabe der Erfindung ist es, eine Werkzeugmaschinenpinole mit einer Werkzeugaufnahme für Werkzeuge mit einem Werkzeughalter und einem Kegel zum Kraftschluss mit einer Pinole aus Stahl, wobei die Pinole in einer Hohlspindel, die in einer Bearbeitungseinheit drehbar gelagert ist, längs verschiebbar geführt wird und an einem der Werkzeugaufnahme gegenüberliegenden Ende in einem Lagerschlitten drehbar und axial gestützt angeordnet ist, zu entwickeln, bei welcher mit verringertem technischen Aufwand die thermischen Dehnung der Pinole mit hoher Zuverlässigkeit und Genauigkeit zwecks Kompensation erfasst wird.

Erfindungsgemäß wird die Aufgabe durch die Merkmale des Anspruchs 1 gelöst. Weitere Ausführungsformen der Erfindung zeigen die Unteransprüche 2 bis 9.

Nachfolgend wird die Erfindung anhand eines Ausführungsbeispieles näher erläutert. Die dazugehörige Zeichnung zeigt den Längsschnitt einer Werkzeugmaschinenpinole.

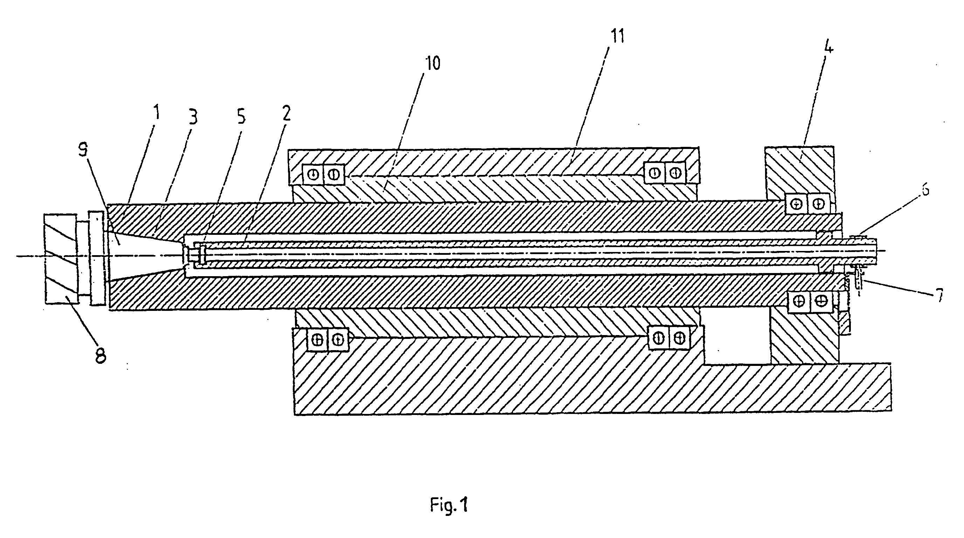

Die Zeichnung zeigt eine Werkzeugmaschinenpinole mit einer Werkzeugaufnahme 3 für Werkzeuge 8 mit einem Werkzeughalter und einem Kegel 9 zum Kraftschluss mit einer Pinole 1. Die Pinole 1 ist aus Stahl gefertigt. Sie ist in einer Hohlspindel 10, die in einer Bearbeitungseinheit 11 drehbar gelagert ist, längs verschiebbar geführt und gegenüber von der Werkzeugaufnahme 3 in einem Lagerschlitten 4 drehbar und axial gestützt angeordnet. In der Pinole 1 ist koaxial ein Bauelement 2 angeordnet, das im Bereich des Kraftschlusses des Werkzeuges mit der Pinole 1 fest verbunden ist und in der Länge bis an das Ende der Pinole 1 im Lagerschlitten 4 reicht und im Lagerschlitten 4 axial gestützt angeordnet ist. Dieses Bauelement 2 weist einen Wärmeausdehnungskoeffizient auf, der um ein mehrfaches niedriger ist als der Wärmeausdehnungskoeffizient der Pinole 1. Das Bauelement 2 kann aus Kohlenfaserverbundwerkstoff gefertigt sein, dessen Wärmeausdehnungskoeffizient gleich Null ist. Das Bauelement 2 kann auch aus einer Material gefertigt sein, dessen Wärmeausdehnungskoeffizient um das Mehrfache höher ist als der der Pinole 1. Aufgrund dieser verhältnismäßig großen Unterschiede der Wärmeausdehnungskoeffizienten der beiden koaxial angeordneten Bauteile, Pinole 1 und Bauelement 2, stellen sich bei Temperaturänderungen Längenveränderungen des Endes der Pinole 1 gegenüber dem Ende des Bauelementes 2 ein. Diese Längenänderungen werden von einem Sensor erfasst und als Ausgangssignale über eine Auswerteelektronik und Maschinensteuerung in Kompensationswerte für die lagegeregelte Pinolenvorstellung mittels des Lagerschlittens 4 gewandelt. Der Sensor ist in der Figur als ein Wegsensor ausgebildet, wobei im Bereich des Lagerschlittens 4 eine Messhülse 6 auf dem Bauelement 2 und ein Sensor 7 am Lagerschlitten 4 befestigt sind. Das Bauelement 2 ist eine Stange eines Spannsystems 5 zum Kraftschluss des Werkzeuges 8 mit der Pinole 1. Es kann aber auch ein Rohr sein, welches im Bereich des Kraftschlusses des Werkzeuges mit der Pinole 1 fest mit dieser verbunden ist. In einer weiteren Ausführungsform der Erfindung ist der Sensor als Kraftsensor ausgebildet, wobei die Spannkraft zum Kraftschluss des Werkzeuges 8 mit der Pinole 1 durch Federn am Ende der Stange aufgebracht wird, und die Änderungen der Spannkraft aufgrund der Längenänderung der Pinole bei Temperaturänderungen erfasst und über die Auswerteelektronik und Maschinensteuerung in die Kompensationswerte gewandelt werden.

### Bezugszeichen

- 1: Pinole
- 2: Bauelement
- 3: Werkzeugaufnahme
- 4: Lagerschlitten
- 5: Spannsystem
- 6: Messhülse
- 7: Sensor
- 8: Werkzeug
- 9: Kegel
- 10: Hohlspindel
- 11: Bearbeitungseinheit

## Patentansprüche

1. Werkzeugmaschinenpinole (1) mit einer Werkzeugaufnahme für Werkzeuge (8) mit einem Werkzeughalter und einem Kegel (9) zum Kraftschluss mit einer Pinole aus Stahl, wobei die Pinole in einer Hohlspindel (10), die in einer Bearbeitungseinheit drehbar gelagert ist längs verschiebbar geführt wird und an einem der Werkzeugaufnahme (3) gegenüberliegenden Ende in einem Lagerschlitten (4) drehbar und axial gestützt angeordnet ist, wobei koaxial in der Pinole (1) ein Bauelement (2) angeordnet ist, das im Bereich des Kraftschlusses des Werkzeuges mit der Pinole (1) fest mit der Pinole (1) verbunden ist und in der Länge bis an das Ende der Pinole (1) im Lagerschlitten (4) reicht und im Lagerschlitten (4) axial gestützt angeordnet ist **dadurch gekennzeichnet, dass** die Pinole (1) einen anderen Wärmeausdehnungskoeffizienten aufweist als der des Bauelementes (2), und bei Temperaturänderungen die Längenänderungen der Pinole (1) gegenüber dem Bauelement (2) aufgrund der unterschiedlichen Größen der beiden Wärmeausdehnungskoeffizienten mittels eines Sensors (7) als Ausgangssignale erfasst werden und über eine Auswerteelektronik und Maschinensteuerung in Kompensationswerte für die lagegeregelte Pinolenverstellung mittels des Lagerschlittens (4) gewandelt werden.

2. Werkzeugmaschinenpinole nach Anspruch 1, **dadurch gekennzeichnet, dass** der Wärmeausdehnungskoeffizient der Pinole (1) mindestens 2-fach höher ist als der des Bauelementes (2).

3. Werkzeugmaschinenpinole nach Anspruch 1, **dadurch gekennzeichnet, dass** der Wärmeausdehnungskoeffizient der Pinole (1) mindestens 2-fach niedriger ist als der des Bauelementes (2).

4. Werkzeugmaschinenpinole nach Anspruch 1, **dadurch gekennzeichnet, dass** das Bauelement (2) aus einem Kohlenfaserverbundwerkstoff gefertigt ist, dessen Wärmeausdehnungskoeffizient gleich Null ist.

5. Werkzeugmaschinenpinole nach Anspruch 1, **dadurch gekennzeichnet, dass** das Bauelement (2) aus einer Stahlsorte gefertigt ist, deren Wärmeausdehnungskoeffizient um das Mehrfache niedriger ist als der der Pinole (1).

6. Werkzeugmaschinenpinole nach Anspruch 1, **dadurch gekennzeichnet, dass** das Bauelement (2) ein Rohr ist.

7. Werkzeugmaschinenpinole nach Anspruch 1, **dadurch gekennzeichnet, dass** das Bauelement (2) eine Stange eines Spannsystems (5) zum Kraftschluss des Werkzeuges (8) mit der Pinole (1) ist.

8. Werkzeugmaschinenpinole nach Anspruch 1, **dadurch gekennzeichnet, dass** der Sensor (7) als Wegsensor ausgebildet ist, wobei im Bereich des Lagerschlittens (4) eine Messhülse (6) auf dem Bauelement (2) und der Sensor (7) am Lagerschlitten (4) befestigt sind.

9. Werkzeugmaschinenpinole nach Anspruch 1 und 5, **dadurch gekennzeichnet, dass** der Sensor (7) als Kraftsensor ausgebildet ist, wobei die Spannkraft zum Kraftschluss des Werkzeuges (8) mit der Pinole (1) durch Federn am Ende der Stange aufgebracht wird, und die Änderungen der Spannkraft aufgrund der Längenänderung der Pinole (1) bei Temperaturänderungen erfasst und in die Kompensationswerte für die lagegeregelte Pinolenverstellung mittels des Lagerschlittens (4) gewandelt werden.

## Claims

1. Machine-tool spindle sleeve (1) having a tool receptacle for tools (8) with a tool holder and a taper (9) for the frictional connection to a spindle sleeve made of steel, the spindle sleeve being guided in a longitudinally displaceable manner in a hollow spindle (10) rotatably mounted in a machining unit and being arranged in a rotatable and axially supported manner in a bearing carriage (4) at an end opposite the tool receptacle (3), a component (2) being arranged coaxially in the spindle sleeve (1), said component (2) being firmly connected to the spindle sleeve (1) in the region of the frictional connection between the tool and the spindle sleeve (1) and extending lengthwise up to the end of the spindle sleeve (1) in the bearing carriage (4) and being arranged in the bearing carriage (4) in an axially supported manner, **characterized in that** the spindle sleeve (1) has a different thermal expansion coefficient from that of the component (2), and, during changes in temperature, the changes in length of the spindle sleeve (1) relative to the component (2) on account of the different magnitudes of the two thermal expansion coefficients are detected as output signals by means of a sensor (7) and are converted via an electronic evaluating system and a machine control into compensation values for the position-controlled adjustment of the spindle sleeve by means of the bearing carriage (4).

2. Machine-tool spindle sleeve according to Claim 1, **characterized in that** the thermal expansion coefficient of the spindle sleeve (1) is at least 2 times higher than that of the component (2).

3. Machine-tool spindle sleeve according to Claim 1, **characterized in that** the thermal expansion coefficient of the spindle sleeve (1) is at least 2 times lower than that of the component (2).

4. Machine-tool spindle sleeve according to Claim 1, **characterized in that** the component (2) is produced from a carbon-fiber composite material whose thermal expansion coefficient is equal to zero.

5. Machine-tool spindle sleeve according to Claim 1, **characterized in that** the component (2) is produced from a steel grade whose thermal expansion coefficient is several times lower than that of the spindle sleeve (1).

6. Machine-tool spindle sleeve according to Claim 1, **characterized in that** the component (2) is a tube.

7. Machine-tool spindle sleeve according to Claim 1, **characterized in that** the component (2) is a rod of a clamping system (5) for the frictional connection between the tool (8) and the spindle sleeve (1).

8. Machine-tool spindle sleeve according to Claim 1, **characterized in that** the sensor (7) is designed as a displacement sensor, a measuring sleeve (6) being fastened to the component (2) in the region of the bearing carriage (4) and the sensor (7) being fastened to the bearing carriage (4).

9. Machine-tool spindle sleeve according to Claims 1 and 5, **characterized in that** the sensor (7) is designed as a force sensor, the clamping force for the frictional connection between the tool (8) and the spindle sleeve (1) being applied by springs at the end of the rod, and the changes in the clamping force on account of the change in length of the spindle sleeve (1) during changes in temperature being detected and being converted into the compensation values for the position-controlled adjustment of the spindle sleeve by means of the bearing carriage (4).

## Revendications

1. Douille pour machine-outil (1) comprenant un logement d'outil pour outils (8) avec un porte-outils et un cône (9) d'engagement par force avec une douille en acier, la douille étant guidée de manière à pouvoir coulisser longitudinalement dans une broche creuse (10) qui est montée à rotation dans une unité d'usinage, et étant disposée de manière supportée axialement et à rotation dans un chariot de support (4) à une extrémité opposée au logement d'outil (3), un élément de construction (2) étant disposé coaxialement dans la douille (1), lequel est connecté fixement à la douille (1) dans la région de l'engagement par force de l'outil avec la douille (1) et s'étend en longueur jusqu'à l'extrémité de la douille (1) dans le chariot de support (4) et est disposé de manière supportée axialement dans le chariot de support (4), **caractérisé en ce que** la douille (1) présente un coefficient de dilatation thermique différent de celui de l'élément de construction (2), et en cas de variations de température, les variations de longueur de la douille (1) par rapport à l'élément de construction (2) sont détectées sur la base des valeurs différentes des deux coefficients de dilatation thermique au moyen d'un capteur (7) sous forme de signaux de départ et sont converties par le biais d'une électronique d'analyse et d'une commande par machine en valeurs de compensation pour le réglage régulé en position de la douille au moyen du chariot de support (4).

2. Douille pour machine-outil selon la revendication 1, **caractérisée en ce que** le coefficient de dilatation thermique de la douille (1) est au moins deux fois plus grand que celui de l'élément de construction (2).

3. Douille pour machine-outil selon la revendication 1, **caractérisée en ce que** le coefficient de dilatation thermique de la douille (1) est au moins deux fois moins grand que celui de l'élément de construction (2).

4. Douille pour machine-outil selon la revendication 1, **caractérisée en ce que** l'élément de construction (2) est fabriqué à partir d'un matériau composite en fibres de carbone, dont le coefficient de dilatation thermique est égal à zéro.

5. Douille pour machine-outil selon la revendication 1, **caractérisée en ce que** l'élément de construction (2) est fabriqué à partir d'un type d'acier dont le coefficient de dilatation thermique est inférieur d'un multiple à celui de la douille (1).

6. Douille pour machine-outil selon la revendication 1, **caractérisée en ce que** l'élément de construction (2) est un tube.

7. Douille pour machine-outil selon la revendication 1, **caractérisée en ce que** l'élément de construction (2) est une tige d'un système de serrage (5) pour l'engagement par force de l'outil (8) avec la douille (1).

8. Douille pour machine-outil selon la revendication 1, **caractérisée en ce que** le capteur (7) est réalisé sous la forme d'un capteur de position, une gaine de mesure (6) étant disposée sur l'élément de construction (2) et le capteur (7) étant disposé sur le chariot de support (4) dans la région du chariot de support (4).

9. Douille pour machine-outil selon la revendication 1 et 5, **caractérisée en ce que** le capteur (7) est réalisé sous la forme d'un capteur de force, la force de serrage étant appliquée pour l'engagement par force de l'outil (8) avec la douille (1) par effet de ressort à l'extrémité de la tige, et les variations de la force de serrage sont détectées sur la base de la variation de longueur de la douille (1) dans le cas de variations de température et sont converties en valeurs de compensation pour le réglage régulé en position de la douille au moyen du chariot de support (4).
